# EUROPÄISCHE PATENTANMELDUNG

(11) **EP 4 566 850 A1**
(43) Veröffentlichungstag der Anmeldung: **11.06.2025**
(21) Anmeldenummer: 24000141.2
(22) Anmeldetag: 03.12.2024
(51) Int. Cl.: B60C 29/06

(54) **INDIVIDUALISIERTE VENTILUMMANTELUNG**

(30) Priorität: 06.12.2023 DE 102023005001; 12.09.2024 DE 102024002930
(71) Anmelder: Henner, Nause, 30177 Hannover (DE)
(72) Erfinder: Henner, Nause, 30177 Hannover (DE)
(74) Vertreter: Hartmann, Jost

(57) **Zusammenfassung**

Die individualisierte Ventilummantelung umschließt vorteilhaft das gesamte Ventil von der Felge bis zur Ventilspitze und ermöglicht eine optische Aufwertung von Reifenventilen ohne technische Einschränkung. Funktion und Nutzen der Ummantelung als Ventilschutz bleibt unverändert. Bei der Anwendung bedarf es keiner Extras oder besonderem Know-how. Wesentliches Bauteil ist eine Ventilschaftaufnahme als Adapter zwischen Ventil und Ventilschaft und einem den Ventilschaft und Ventil umgebenden Hohlkörper.

## Beschreibung

Die Erfindung ist eine individuell gestaltbare Ummantelung für Reifenventile, z.B. des Fahrrades, Kinderwagen, Moped, Kettcar etc., die den Ventilschaft und das Ventil vollständig umschließen kann.

Reifen, insbesondere klassische Luftreifen von beispielsweise Fahrrädern, werden über ein Ventil befüllt. Das eigentliche Ventil sitzt in einem Ventilschaft, der verschiedene Durchmesser und unterschiedliche Längen aufweisen kann. Der Ventilschaft kann auf dem Schlauch aufvulkanisiert sein und erstreckt sich über/durch ein Felgenloch nach innen zur Felgennabe. Im Ventilschaft kann das entsprechende Ventil eingeschraubt werden. Der Ventilschaft und Ventil ist in der Länge vom Felgenloch bis zur Ventilspitze sichtbar.

Es gibt am Markt sogenannte Ventilkappen mit verschiedenen Aufbauten oder Symbolen, wie beispielsweise erhältlich bei www.wheel-faces.de. Diese bekannten Ventilkappen werden nur einige Millimeter auf das Ventil bzw. den Ventilschaft geschraubt. Der größte Teil des Ventiles bzw. Ventilschaftes bleibt grundsätzlich sichtbar.

Die weiteren Nachteile der bekannten Ventilkappen sind:
- eine definierte Endposition aufgrund vordefinierter Dimensionen des Sackloches mit Gewinde.
- sind sehr klein, nur so groß wie das Ventil. Wenig detailliert.
- ungünstiger Schwerpunkt - durch die Positionierung oben auf dem Ventil, grundsätzlich sollte ein Schwerpunkt immer so niedrig wie möglich gewählt werden.

Alle handelsüblichen Fahrräder am Markt sind Massenware und heben sich nicht voneinander ab. Es gibt keine Individualisierung und somit keine emotionale Bindung zu einem Fortbewegungsmittel der Zukunft.

Diese Probleme löst die vorliegende Erfindung.

Die Erfindung umfasst zum Einen eine Ventilummantelung gebildet im Wesentlichen aus einem Hohlkörper umfassend eine Ventil(schaft)aufnahme. In der Ventilschaftaufnahme kann der Kontaktbereich zum Ventilschaft bzw. Ventil ein Gewinde, eine Gewindehülse und/oder weiches/biegsames Material umfassen bzw. aus diesem bestehen. Über das Gewinde, der Gewindehülse und/oder das weiche/biegsame Material wird die Ummantelung am Ventil bzw. Ventilschaft lösbar befestigt.

Die erfindungsgemäße Ventilummantelung umfasst einen Hohlkörper mit einer innenliegenden Ventilschaftaufnahmekontur, im Folgenden auch nur Aufnahmekontur genannt, und einer Ventilschaftaufnahme, im folgenden auch Ventilaufnahme oder nur Aufnahme genannt. Diese Aufnahme ist ein Körper, der passig in die Ventilaufnahmekontur eingesetzt werden kann, die innerhalb des Hohlkörper vorgesehen ist. Erfindungsgemäß umschließt die Ummantelung dann den Ventilschaft und auch das enthaltene Ventil samt ggf. vorhandener Bauteile.

Die Erfindung umfasst ebenso die Ventilschaftaufnahme.

Die erfindungsgemäße Ventilschaftaufnahme ist als Adapter zwischen Ventil und Ventilschaft und einem den Ventilschaft und Ventil umgebenden Hohlkörper konzipiert. Die Ventilschaftaufnahme umfasst ein Gewinde, eine Gewindehülse, ein Schienensystem und/oder weiches und/oder biegsames Material oder besteht aus diesem. Über das Gewinde, eine Gewindehülse, ein Schienensystem und/oder weiches und/oder biegsames Material steht die Ventilschaftaufnahme einerseits lösbar in Eingriff zum Ventil bzw. dem Ventilschaft und andererseits in Kontakt mit dem Hohlkörper der damit lösbar am Ventil bzw. dem Ventilschaft befestigt wird.

Der Hohlkörper ist daher mit der innenliegenden Aufnahmekontur als hohl zu bezeichnen. Der Hohlkörper kann neben der Aufnahme weitere Hohlräume umfassen oder ansonsten gefüllt sein.

Erfindungsgemäß hat die Ventilschaftaufnahme vorteilhaft keinen entscheidenden Einfluss bei der Gestaltung des Hohlkörpers zu einem Objekt, Figur, etc. Damit ist eine Flexibilität bei der Auswahl möglicher Gestaltungen gegeben. Der Fuß und innere untere Bereich des Hohlkörpers hat dabei idealerweise die passende Kontur für die Ventilschaftaufnahme, sie ist damit quasi das Gegenstück. Die erfindungsgemäße Ventilschaftaufnahme, der Adapter hat vorzugsweise eine gleichbleibende Kontur. Somit besteht die Möglichkeit diese auch bei verschieden ausgestalteten Hohlkörpern zu nutzen, die Ventilschaftaufnahme ist quasi ein Universal-Adapter. Die Ventilschaftaufnahme kann bevorzugt einfache Haftungsmöglichkeiten an der äußeren Oberfläche vorsehen werden, wie beispielsweise Klettverschlüsse, Klick- oder Rastmechanismen, über die der aufzusetzenden Hohlkörper am Adapter (Ventilschaftaufnahme) lösbar befestigt werden kann.

Die Ventilschaftaufnahme und der Hohlkörper mit der Aufnahmekontur stellen die vorliegende Erfindung als Ventilummantelung dar.

Die Ventilschaftaufnahme kann einerseits als für die Aufnahmekontur passiger Körper gestaltet sein und mit weichem/biegsamem Material ausgestaltet sein mit dem die Ummantelung am Ventil, Ventilschaft lösbar befestigt werden kann.

Andererseits kann in der Aufnahmekontur direkt weiches/biegsames Material vorgesehen sein, welches dann gleichsam die Ventilschaftaufnahme bildet.

Die Ventilschaftaufnahme oder die Aufnahmekontur kann ebenso selbst ein Innengewinde besitzen oder mit einer durchgängigen Gewindehülse versehen sein.

In einer bevorzugten Ausführungsform ist die Ventilschaftaufnahme als Adapter rechteckig gefertigt mit einer Breite von mind.14 mm, einer Länge von mind.16 mm und einer Tiefe von mind.15 mm.

In der Ausführungsform der erfindungsgemäßen Ummantelung ohne separate Ventilschaftaufnahme bildet das in der Aufnahmekontur vorhandene Gewinde, Gewindehülse, Schienensystem und/oder weiches und/oder biegsames Material dann die Ventilschaftaufnahme, die aus diesem Gewinde, Gewindehülse, dem Schienen und/oder Material besteht.

Die Ventilummantelung ist so dimensioniert, dass das zu umgebende Ventil sowie der Ventilschaft vollständig ummantelt werden kann, sowohl zu den Seiten und als auch nach oben zum Ventilausgang.

Je nachdem wieviel des Ventilschaftes aus dem Felgenloch herausragt kann die erfindungsgemäße Ummantelung das Ventil vollständig umschließen und damit von außen dieses sichtbar umgestalten.

Vollständig umschließen bzw. ummanteln bedeutet damit den Bereich von der Felge, der Felgenmutter über den Ventilschaft, ggf. der Überwurfmutter, bis zum Ventilende und der Staubkappe. Sofern der Anwender die Ummantelung nicht bis zur Felge anbringt, sind natürlich dann Teile des Ventilschaftes sichtbar. Entscheidend ist aber, dass der erfindungsgemäße Hohlkörper eine vollständige Ummantelung ermöglicht.

Der Hohlkörper mit Aufnahmekontur, die Ventilschaftaufnahme sowie einzelne oder alle Bauteile können vorteilhaft aus Kunststoff, Gummi, Holz, Aluminium oder Mischungen dieser Materialien gefertigt werden.

Der Hohlkörper ist vorteilhaft so gestaltet, dass man von außen, bei angelegter Ummantelung das Ventil, den Ventilschaft sowie die innenliegende Aufnahmekontur mit oder ohne Ventilschaftaufnahme nicht sieht.

So kann in einer anderen Ausführungsform der Hohlkörper aus durchsichtigem Material, wie transparentem Kunststoff oder mit Teilen eines Glasfensters versehen sein, so dass zwar Teile des Ventils oder der Ventilaufnahme sichtbar werden, jedoch weiterhin erfindungsgemäß der Ventilschaft samt Ventil vollständig umschlossen werden kann.

Der Hohlkörper kann äußerlich als beliebiges Objekt oder Form gestaltet sein. Ebenso ist es möglich auf den Hohlkörper äußerlich weitere Gestaltungsbauten anzubringen, wie angeklebte oder anderweitig befestigte Formen und Strukturen. So kann der Hohlkörper einfach gestaltet sein, wie beispielsweise als Zylinder, und am oder über den Hohlkörper können Figuren und andere Gebilde angebracht werden.

Dazu können beispielsweise einfache Haftungsmöglichkeiten an der äußeren Oberfläche des Hohlkörpers vorgesehen werden, wie beispielsweise Klettverschlüsse, Klick- oder Rastmechanismen, über die die aufzusetzenden Figuren am Hohlkörper lösbar befestigt werden können.

Die Ummantelung sowie die jeweiligen einzelnen Bauteile können vorteilhaft ein- oder verschiedenfarbig gestaltet sein.

Die erfindungsgemäße Ventilummantelung ist entsprechend den Dimensionen der bekannten Reifenventile, den Radgrößen, den Radfelgen und den Speichenabständen angepasst.

In der Draufsicht, dem Durchmesser d, kann die Ventilummantelung bevorzugte Größen von d=10mm bis 100mm, idealerweise von 15mm bis 50mm aufweisen.

Die Höhe h der Ummantelung ist länger als die Länge des aus dem Felgenloch herausragendem und zu ummantelnden Ventilschaftes inklusive enthaltenem Ventil. Die Höhe h weist bevorzugt Größen von h=15mm bis 200mm, idealerweise von 25mm bis 100mm, auf.

Die erfindungsgemäße Ventilummantelung umfasst idealerweise einen Hohlkörper mit einer von außen nicht sichtbaren innenliegenden Ventilaufnahme. Diese befindet sich vorteilhaft im unteren Drittel des Hohlkörpers. D.h. bei aufgesetzter Ventilummantelung auf dem Ventil befindet sich die Ventilaufnahme im Bereich zur Felge. Die äußere Kontur des Hohlkörpers lässt sich, unabhängig davon für welche Ventilart die Aufnahme konzipiert ist, frei gestalten und besteht aus einem, zwei oder mehreren Teilen. Die Aufnahme für Schrader(Auto)Ventile bzw. französische (Presta)Ventile besitzt eine Durchgangsbohrung mit vorteilhaft einem passenden VG6 oder VG8 Innengewinde.

Bei anderen Ventilarten, erfindungsgemäß vorteilhaft, erfolgt die Positionierung bzw. Befestigung der Ventilummantelung auf dem Ventilschaft nach dem Prinzip der Reibung über das weiche bzw. biegsame Material. Durch die wirkenden Reibungskräfte wird die Ummantelung an der gewünschten Position gehalten. Das Prinzip wird durch das Nutzen von u.a. verschiedenen Werkstoffen und der Gewindelänge verstärkt.

Bevorzugt besteht die Ummantelung, der Hohlkörper mit Ventilschaftaufnahmekontur und die Ventilschaftaufnahme aus Kunststoff. Hierbei können vorteilhaft die für den 3D Druck vorhandenen Kunststoffe zur Anwendung kommen, wie beispielsweise Polymilchsäure (PLA), Acrylnitril-Butadien-Styrol (ABS), Acrylnitril-Styrolacrylat (ASA), Polyethylenterephthalat (PET), Polycarbonat (PC) oder Hochleistungs-Kunststoffe (PEEK, PEKK, ULTEM).

Als weiches oder biegsames Material kann vorteilhaft Weich-PVC oder Polyolefine, insbesondere Polyethylen, synthetisches Gummi oder eben Gummi-Materialien verwendet werden. Gummi ist ein Kautschukprodukt, bei dem es sich um Natur- oder Synthesekautschuk handeln kann, es aber in beiden Fällen ein viskoelastisches Material ist.

Weich oder biegsam bedeutet bei Raumtemperatur nicht hart oder fest, sondern einem Druck leicht nachgebend. D.h. das Material ist so beschaffen, dass ein Verändern der Form leicht, mit geringem Kraftaufwand möglich ist aber sich ebenso sehr wieder in die Ursprungsform zurückversetzt.

Bei den möglichen Varianten mit Gewindehülsen handelt es sich um gewöhnliche Zukaufteile.

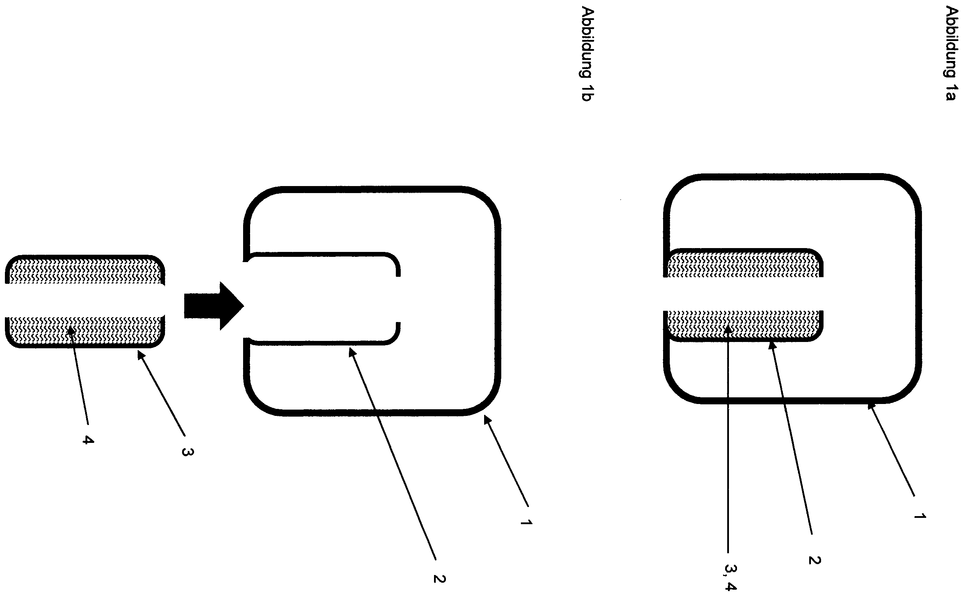

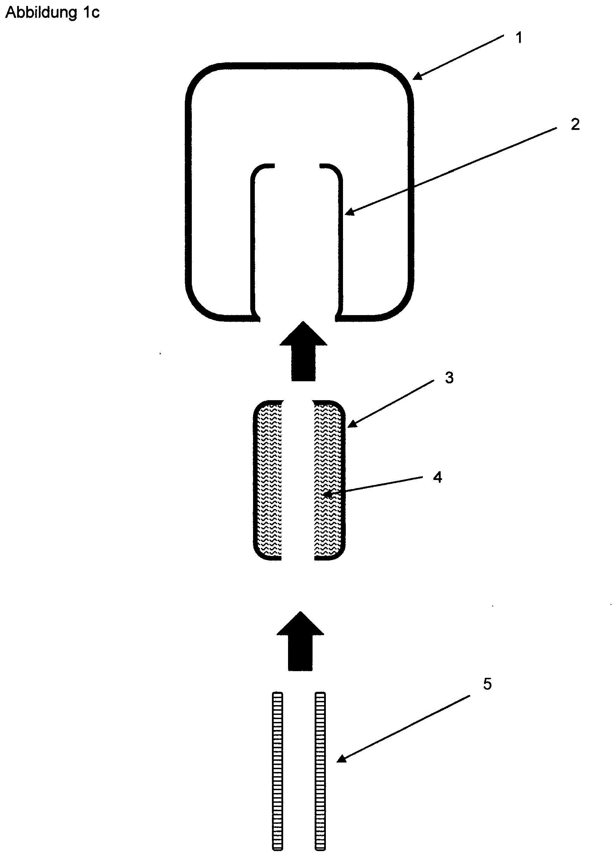

Die erfindungsgemäßen möglichen Ausgestaltungen der Ventilummantelung sind in den Abbildungen 1 bis 6 näher dargestellt und erläutert.

Abbildung 1a: Die Aufnahmekontur (2) im inneren des Hohlkörpers (1) kann vollflächig oder teilflächig mit weichem/biegsamem Material (4), wie z.B. einer Gummischicht, beschichtet sein. Diese Beschichtung bildet dann die tatsächliche Ventilaufnahme (3). Durch Überstülpen auf den Ventilschaft erfolgt dann, durch Zusammendrücken bzw. Dehnen des weichen/biegsamen Materials, z.B. eine Gummischicht, eine Halterung der Ummantelung am Ventilschaft und Ventil. Somit kann die erfindungsgemäße Ventilummantelung aus einem Stück gefertigt sein, indem auf der Oberfläche der Aufnahmekontur ein Gewinde oder ein weiches/biegsames Material gefertigt wird.

Abbildung 1b: In einer weiteren Ausführungsform umfasst die erfindungsgemäße Ventilummantelung den Hohlkörper (1) mit Aufnahmekontur (2) und einer dort platzierten Ventilschaftaufnahme (3). Dabei können der Hohlkörper (1) mit seiner Aufnahmekontur (2) und der Ventilschaftaufnahme (3) aus gleichen oder unterschiedlichen Materialien gefertigt werden. Die Ventilaufnahme (3) bildet mittels passendem Gewinde und/oder dem weichem/biegsamen Material (4) dann die Befestigung am Ventilschaft und Ventil. Die Ventilschaftaufnahme (3) kann über eine Klick-, Raster- oder Schiebebefestigung in der Aufnahmekontur (2) des Hohlkörpers (1) lösbar arretiert werden.

Abbildung 1c: Eine weitere Ausführungsform beschreibt eine erfindungsgemäße Ventilummantelung umfassend einen Hohlkörper (1) mit Aufnahmekontur (2) und einer dort platzierten Ventilschaftaufnahme (3) mit einer Gewindehülse (5). Die Ventilaufnahme (3) bildet mittels passender Gewindehülse (5) die Befestigung am Ventilschaft und Ventil. Auch hier können alle verwendeten Bauteile aus gleichen oder unterschiedlichen Materialien gefertigt werden.

Der als weicher/biegsamer bezeichnete Bereich (4) kann beispielsweise als Gummilippen aufgebaut sein. Die weiche oder biegsame Materialschicht kann vollflächig oder teilflächig in der Aufnahmekontur oder der Aufnahme angebracht sein.

Abbildungen 1a, 1b und 1c zeigen entsprechende verschiedene Varianten.

Abbildung 1a zeigt den Hohlkörper (1) und die Ventilschaftaufnahmekontur (2), an der an den inneren Seiten ein weiches Material (4), beispielsweise eine Gummischicht, angebracht ist.

Abbildung 1b zeigt den Hohlkörper (1) mit der Ventilschaftaufnahmekontur (2). Separat davon ist die passige Ventilschaftaufnahme (3), die wiederum innen ein weiches Material (4) umfasst. Die Ventilaufnahme (3) kann in die Aufnahmekontur (2) geschoben werden (Pfeil) und dort mit üblichen Halterungsmöglichkeiten befestigt werden, vorteilhaft wiederum lösbar verbunden, beispielsweise mittels einem Raster.

Abbildung 1c zeigt den Hohlkörper (1) mit der Ventilschaftaufnahmekontur (2). Separat davon ist die passige Ventilschaftaufnahme (3), die wiederum eine durchgängige VG6 oder VG8 Gewindehülse (5) umfasst. Die Hülse (5) kann in die Ventilaufnahme (3) gepresst und/oder gedreht werden (Pfeil) und anschließend wird die gesamte Ventilaufnahme (3) mit Hülse (5) in die Aufnahmekontur (2) geschoben (Pfeil) und dort mit üblichen Halterungsmöglichkeiten befestigt werden, vorteilhaft wiederum lösbar verbunden, beispielsweise mit einem Raster.

Auch bei einem Dunlop Ventil erfolgt die Ventilummantelung erfindungsgemäß nach dem gleichen Prinzip. Hierbei ist die Ventilschaftaufnahme ein Teil ohne Gewinde und kann vorteilhaft zwei unterschiedlich große Teilbereiche aufweisen. Der untere Bereich des Aufnahmekörpers hat hierbei eine Aussparung, beispielsweise mit den Maßen ca. Ø9,7mm×15mm. Im oberen Bereich befindet sich die Aufnahme für den Ventil-Gewindekopf mit einer Aussparung von ca. Ø5mm×7mm. Das Material um diese Aussparungen ist weicher, biegsamer als der Rest des Aufnahmeköpers. Beim 'Draufschieben' und Positionieren um bzw. auf das Ventil wird dadurch das weichere Material verdrängt. Wenn die gewünschte Position erreicht ist, drückt sich das Material wieder auseinander und verklemmt so die Ummantelung am Ventilschaft und Ventil.

Die Ventilummantelung kann in einem Stück, beispielsweise im Spritzgußverfahren oder per 3D Druck oder weiteren bekannten Verfahren hergestellt werden.

Vorteilhaft kann eine erfindungsgemäße Ummantelung aber auch zwei- oder mehrteilig hergestellt werden. Es kann jedes Einzelteil separat hergestellt werden und abschließend zur fertigen Ventilummantelung zusammengefügt werden. Die jeweiligen Einzelteile können alle aus einem oder verschiedenen Materialien hergestellt werden.

So ist es beispielsweise möglich zunächst zwei halbierte Hohlkörper mit halbierter Ventilschaftaufnahmekontur und Ventilschaftaufnahmen zu fertigen und dann abschließend zusammenzufügen.

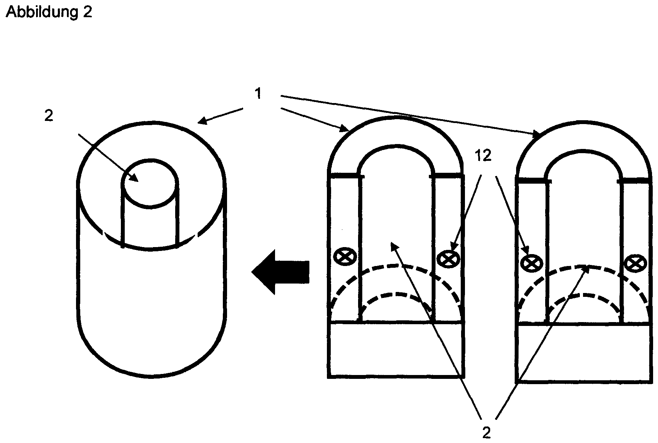

Abbildung 2 erläutert diese Variante.

Die Ummantelung besteht aus zwei Halbkörpern (1) und innenliegende Aufnahmen (2). An den Seiten der halbierten Hohlkörper (1) können Befestigungsmöglichkeiten (12) vorgesehen werden, mit Hilfe derer die beiden Hälften zu einer Ummantelung zusammengesetzt werden können.

Die äußere Kontur des Hohlkörpers lässt sich, unabhängig davon für welche Ventilart die Aufnahme konzipiert ist, frei gestalten und besteht aus einem oder mehreren zusammengesetzten Teilen. Diese können z.B. rund, eckig oder abstrakt, z.B. in der Form eines Gesichtes oder eines Körpers sein. Der Hohlkörper der Ummantelung hat vorteilhaft eine Wandstärke von 1mm bis 20mm. Die Abmaße der Ventilaufnahme ergeben sich aus den Maßen der Aufnahmekontur.

Die Maße liegen vorteilhaft bei:
- Eine eckige/quadratische Ausführung der Ventilummantelung als z.B. Müslipackung kann Maße zwischen 10mm × 10mm × 10mm bis 50mm × 50mm × 150mm betragen.
- Bei einer rund gestalteten Ummantelung als z.B. Ball liegen die Maße zwischen Ø10mm bis Ø100mm.
- Eine abstrakte/kombinierte Form oder Objekt, wie z.B. ein Nagellackverpackung, ist im unteren Bereich viel größer und anders geformt als im oberen Bereich. Wie ein 'echter' Nagellack ist der Hohlkörper dann im unteren Bereich als eckiges Farbbehälterchen ausgeführt und größer als der obere Bereich. Dieser wiederum ist zylindrisch geformt und stellt den Verschluss mit kleinem Handgriff und Pinsel da. Der Behälter hätte die Abmaße 18mmx18mmx20mm und der Griff Ø14mm×18mm.
- Bei allen drei Gestaltungsvarianten hätte der Hohlkörper dann eine eckige Bodenkontur von z.B. 12mmx12mm und die dafür die passende Ventilaufnahme.

Die maximale Größe der Ventilummantelung ergibt sich aus der Fahrradfelgen-Größe, dem Abstand der Speichen sowie der Anzahl der Speichen. Diese Werte bestimmen den Freiraum zwischen den Speichen an der Ventilposition - dort, wo die Ummantelung sitzt.

Erfindungsgemäß können alle notwendigen Teile in einem Verfahren produziert werden. Vorteilhaft ist bei einem Schrader(Auto)Ventillfranz.(Presta) Ventil das Gewinde aus Kunststoff hergestellt.

Die erfindungsgemäßen Ventilummantelungen können bis auf das Ende des Ventilschaftes, bis zur Felge, gedreht, geschoben, platziert werden. Sie lassen das Ventil mit Ventilschaft verschwinden.

Die erfindungsgemäße Ventilummantelung erfüllt zusätzlich die Funktionen einer bekannten Staubschutzkappe. Ermöglicht damit einen zusätzlichen Schutz

Zudem weist die Ummantelung, beispielsweise aus Kunststoff hergestellt, ein niedriges Gewicht auf.

Die erfindungsgemäße Ventilummantelung kann so für die herkömmlichen Ventilvarianten am Markt (Dunlop/Schrader/(Auto)/franz.(Presta)Ventil) produziert werden.

Durch die erfindungsgemäße Durchgangsbohrung mit Gewinde bei Schrader(Auto) /franz.(Presta)Ventile und der weichen/biegsamen Ventilaufnahme bei Dunlop Ventilen, gibt es keine festgelegte/bestimmte Position für die Ventilummantelungsfigur.

Die erfindungsgemäße Ventilschaftaufnahme ist ein Universal-Adapter und anwendbar bei verschiedenen Hohlkörper. Es ist einerseits ein Bauteil der erfindungsgemäßen Ventilummantelung und andererseits als Adapter selbst Teil der vorliegenden Erfindung.

Die Ventilschaftaufnahme nimmt vorteilhaft die auftretenden Kräfte im Kontaktbereich zum Ventilschaft und/oder Ventil auf und kann somit den Halt sichern.

Bei der Nutzung eines schon vorgefertigten Hohlkörpers können die Maße der innenliegenden Aufnahmekontur des Holkörpers idealerweise beibehalten werden und sind nicht zwingend zu ändern. Somit bleibt auch der 'Adapter', die Ventilschaftaufnahme, in seinen Ausmaßen unverändert. Grundsätzlich ist durch die erfindungsgemäße Gestaltung die Ventilschaftaufnahme universell einsetzbar. Die gleiche Ventilschaftaufnahme kann als Universal-Adapter, angepasst auf die Ventiltypen, bei vielen verschiedenen Hohlkörpern genutzt werden. Dies spart vorteilhafterweise Ressourcen bei der Fertigung und Montage.

Für die einfache Montage der Ventilummantelung besitzt die Aufnahmekontur und die Ventilschaftaufnahme als Adapter idealerweise Hilfskonturen, z.B. ein Schienensystem, ein Klick-, Rastersystem, ein Gewinde oder eine Gewindehülse.

So kann die Ventilschaftaufnahme zum Ventilschaft beispielsweise mit einem Gewinde ausgestaltet sein und nach aussen zum Hohlkörper mit einem Schienensystem, in das die Aufnahmekontur passig eingreift.

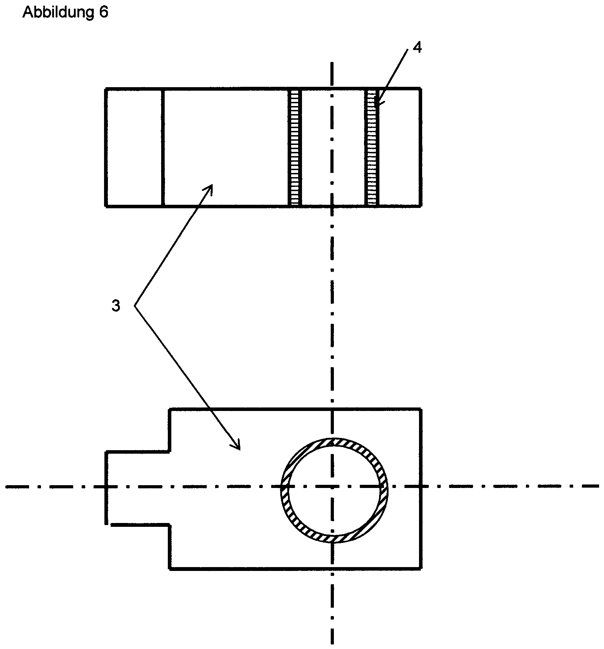

In Abbildung 6 ist diese Ausführungsform dargestellt.

Ein einfache rechteckige Ventilschaftaufnahme als Adapter hat idealerweise eine Breite von mind. 14mm, eine Länge von mind. 16mm und eine Tiefe von mind. 15mm.

Eine Ventilummantelungsfigur kann selber als Hohlkörper gestaltet sein oder zusätzlich auf einen erfindungsgemäßen Hohlkörper befestigt sein.

Die Ummantelung mit individueller Optik kann in jede Richtung/Position gedreht und positioniert werden, im Gegensatz zu einer herkömmlichen Ventilkappe mit Sackloch.

Die erfindungsgemäßen Ventilummantelungen können größere Ausmaße annehmen. Die max. Größe wird durch den Freiraum an der Ventilposition an der Fahrradfelge begrenzt.

Durch die Gestaltung als Hohlkörper sind die erfindungsgemäßen Ventilummantelungen sehr leicht und praktisch nicht als Zusatzgewicht einzuordnen.

Die erfindungsgemäßen Ventilummantelungen haben durch ihre im unteren Bereich innenliegende Ventilaufnahme und der umschließenden, nicht aufbauenden Ummantelung einen niedrigen und somit besseren Schwerpunkt.

Da die bekannten Ventilkappen nur einige Millimeter auf das Ventil bzw. den Ventilschaft geschraubt werden, bleibt der größte Teil des Ventilschaftes grundsätzlich sichtbar. Die erfindungsgemäße Ummantelung kann bis auf das Ende des Ventilschaftes platziert werden. Das ist eine sowohl technischer als auch optisch ansprechender erheblicher Unterschied zu den Ventilkappen-Figuren am Markt.

Durch die erfindungsgemäße Ventilummantelung lassen sich Objekte, Figuren, etc. viel größer und in höherer Detailgetreue darstellen.

Der Konsument kann derzeit nur bestimmte Figuren bzw. Formen für bestimmte Ventile erwerben. Erfindungsgemäß kann der Konsument jede Figur als Ventilummantelung für die verschiedenen Ventilvarianten am Markt, Dunlop/Schrader(Auto)/franz.(Presta)Ventil, individuell produzieren lassen. D.h. eine tatsächliche Individualisierung ist erstmalig gegeben. So kann eine gleichbleibende Figur auch für drei verschiedene Ventile hergestellt werden. Die Figuren müssen nicht angepasst oder verändert werden, um auf die Ventile zu passen.

Beim Kauf von persönlichen und sicherheitsrelevanten Gegenständen setzen sich die Menschen vor dem Kauf mit den technischen Gegebenheiten und der Technik auseinander. So ist beispielsweise bei einer Individualisierung des Fahrrades mit einer Ventilummantelung zu klären, welches Ventil habe ich und welche Ummantelung hat die passende Aufnahme. Dabei wird sich unweigerlich ein technisches Basiswissen angeeignet. Der Nutzer lernt u.a. die verschiedenen Ventilarten kennen und ist in der Lage, zwischen ihnen zu unterscheiden.

Mit den erfindungsgemäßen Ventilummantelungen wird dem Nutzer die Möglichkeit gegeben, sein mit handelsüblichen Ventilen ausgestattetes Eigentum, wie z.B. Fahrrad, Kinderwagen oder Moped individuell zu gestalten. Dabei gibt es keine technischen Einschränkungen und die Anwendung sowie Funktion ist gleich einer Ventilkappe oder auch Staubschutzkappe.

Vorteilhaft ist die erfindungsgemäße Ummantelung durch die folgenden optionalen Merkmale gekennzeichnet:
Durch die Ummantelung ergeben sich keine Einschränkung bei der Anwendung und Nutzen des Rades, des Ventils im Alltag.

Zum An- und Abbringen der Ummantelung sind keine besonderen Vorkenntnisse oder Werkzeuge notwendig.

Durch die Ummantelung ist dem Konsument die Möglichkeit einer Individualisierung gegeben. Er kann seinen persönlichen Charakter über die Ummantelung als Objekt, Figur, etc. ausdrücken.

Die Ummantelung hat eine positive Auswirkung auf das soziale Miteinander im Alltag, Menschen sprechen sich an und treten in Kontakt.

Die erfindungsgemäße Ventilummantelung kann so zur Individualisierung des Fahrrades verwendet werden.

Ein wichtiger, aber nicht zu unterschätzender Punkt ist dabei diese soziale Komponente.
- Durch die Individualisierung stellt sich ein viel engerer Bezug, vor allem bei jüngeren Menschen, zu dem Thema Fahrrad bzw. Fahrradfahren ein. Die Freude das Fahrrad zu nutzen, steigt. Dies ist ein weiteres Argument in Zeiten des Klimawandels, beispielsweise nicht mit dem Auto zu fahren, was nicht zu verachten ist.
- Darüber hinaus ist die Ummantelung ein sogenannter Eyecatcher und bringt Menschen jeglicher Herkunft oder Alter zueinander. Die Nutzer der Ventilummantelungen werden, nicht nur von Fahrradfahrern, angesprochen und tauschen sich über die Ummantelung/Figur aus. Das Sozialverhalten wird gestärkt.
- Durch diese Kontakte treffen sich unbekannte Menschen, überwinden ersten Hürden und die Basis für eine soziale Community ist gegeben.

Beispiel der Herstellung:
Die Ventilummantelung besteht aus z.B. Kunststoff und kann mittels Spritzgussverfahren hergestellt werden. Nach der optischen Gestaltung des Hohlkörpers wird die technische Umsetzbarkeit geprüft. Dabei ergibt sich, aus wie vielen Einzelteilen sich die spätere Ummantelung zusammensetzt und welche Werkzeugformen benötigt werden. Grundsätzlich ist, trotz gestalterischer Freiheit, auf Einfachheit zu achten. Die vollständige Ummantelung sollte aus so wenig wie möglich Einzelteilen bestehen.

Eine einfache Ventilummantelung umfasst nur zwei Teile, einmal den Hohlkörper, der das Objekt bzw. die Figur darstellt, und die Ventilaufnahme. Eine Möglichkeit der Fertigung ist die voneinander getrennte Herstellung, beispielsweise durch Spritzguss oder 3D Druck, und das spätere 'Verheiraten' miteinander'.

Bei der Ventilschaftaufnahme mit Gewindehülse wird die Hülse auf herkömmlich Weise eingepresst oder gegen den Uhrzeigersinn eingedreht.

Die Einzelteile können später eine unlösbare und/oder lösbare Verbindung eingehen.

Bei der 'unlösbaren' Verbindung werden die Kontaktflächen der Ventilaufnahme und die der Aufnahmekontur des Hohlkörpers mit Kleber benetzt. Dann wird die Ventilaufnahme von unten in die Aufnahmekontur gedrückt und positioniert. Durch Verklebung und passigen Einschub entsteht eine schwer lösbare Verbindung zwischen Ventilaufnahme und Hohlkörper.

Bei der lösbaren Verbindung umfassen die Einzelteile idealerweise eine Art Klick-System. Dabei lassen sich die Einzelteile idealerweise per Steckverbindungen formschlüssig ineinander Stecken/Fügen und bei Bedarf wieder trennen.

Die Ventilummantelung ist dann als ein Stück anbringbar oder die Einzelteile können um den Ventilschaft gelegt werden und dann mittels des Klickmechanismus um den Schaft fixiert werden.

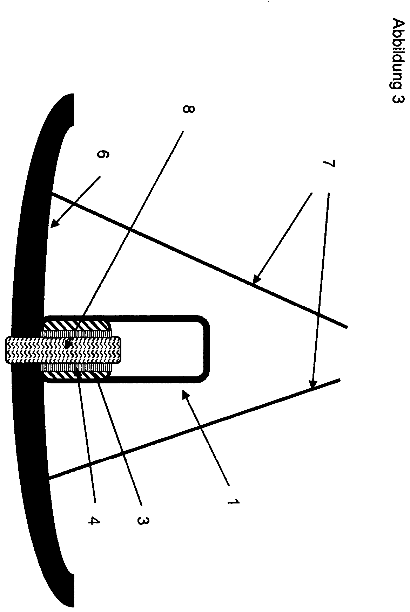

Eine mögliche Anwendung wie am Beispiel Schrader(Auto)/franz.(Presta)Ventil wird in Abbildung 3 skizziert.

Die Größe der Ummantelung wird u.a. durch die Dimensionierung des Ventils (8), der Speichen (7) und Felgengröße (6) vorgegeben.

Die Ventilummantelung, gebildet aus dem Hohlkörper (1) und der Ventilschaftaufnahme (3) mit dem Innengewinde oder Gewindehülse (4) wird auf den Ventilschaft (8) gedreht.

Die Ummantelung kann durch Drehen im oder gegen den Uhrzeigersinn beliebig in der Höhe und Ausrichtung auf dem Ventilschaft (8) positioniert werden. Um bei Bedarf Luftreifen zu befüllen, wird die Ummantelung mit dem Ventilaufnahmekörper (3) gegen den Uhrzeigersinn vom Ventilschaft gedreht und gibt das Ventil frei. Der Luftreifen kann befüllt und die Ummantelung anschließend, wie beschrieben, wieder montiert werden.

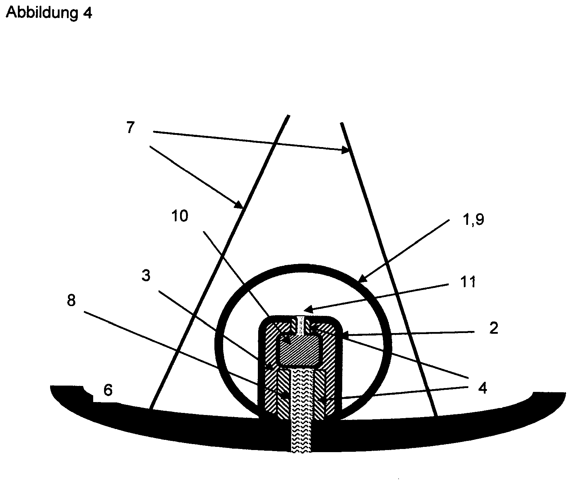

Die Anwendung am Beispiel Dunlop Ventil ist in Abbildung 4 dargestellt.

Der Hohlkörper (1) mit Aufnahmekontur (2) und die Ventilschaftaufnahme (3) umfasst mit dem Kontaktbereich zum Ventilschaft/Ventil das weiche/biegsame Material (4). Der Hohlkörper (1) ist zur äußeren Gestaltung als eine einfache Form, z.B. Ball (9), ausgeführt.

Durch die unterschiedliche Gestaltung der Ventilschaftaufnahme (3) mit einem weichem/biegsamen Material (4) lässt sich die Ummantelung auch über die Ventilüberwurfmutter (10) und den Ventilkopf (11) überstülpen.

Die Größe der Ventilummantelung, hier eines Balles, ist u.a. durch die Dimensionierung des Ventils (8) und seiner Bauteile, wie Überwurfmutter, Ventil, Staubkappe etc. (10,11), der Speichen (7) und Felgengröße (6) vorgegeben.

Die Ummantelung wird mit der Ventilschaftaufnahme (3) auf/über das Ventil und den Ventilschaft (8,10,11) geschoben. Die Ummantelung kann durch Drehen im oder gegen den Uhrzeigersinn beliebig auf dem Ventilschaft (8) positioniert werden. Um bei Bedarf Luftreifen zu befüllen, wird die Ummantelung mit der Ventilaufnahme (3) vom Ventilschaft (8) gezogen und gibt das Ventil frei. Der Luftreifen kann befüllt und die Ummantelung anschließend, wie beschrieben, wieder montiert werden.

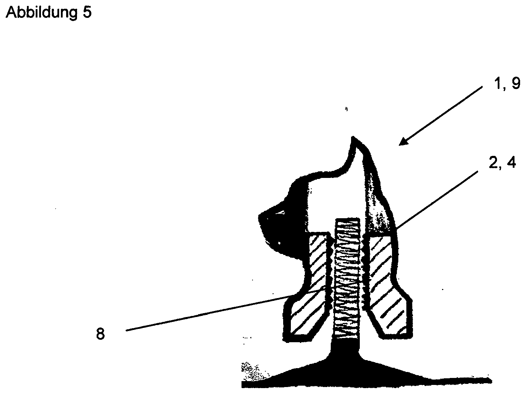

Abbildung 5 zeigt eine Ventilummantelung in der der Hohlkörper als Tierfigur (9) gestaltet ist. Der Hohlkörper (1) ist als Katzenkopf (9) geformt. Die innenliegende Ventilschaftaufnahme (2) ist mit einem Gewinde (4) versehen, mit Hilfe dessen die Ummantelung auf den Ventilschaft (8) gedreht werden kann.

In Abbildung 6 ist beispielhaft eine einfache rechteckige Ventilschaftaufnahme (3) als Adapter mit Gewinde (4) dargestellt. Die Außenmaße der Aufnahme (3) haben idealerweise eine Breite von mind.14mm, eine Länge von mind.16mm und eine Tiefe von mind.15mm. Die abgewinkelte Führung dient als Hilfe bei der Montage, dem Zusammenstecken der Aufnahme (3) in den Hohlkörper (1) und beugt Montagefehler vor.

Die Bohrung für das Gewinde (4) ist so positioniert, dass die gesamte Ventilummantelung später optimal auf dem Ventil (8) und der Felge (6) sitzt.

Der Bereich mit dem Gewinde (4) muss nicht zwingend als Gewinde ausgeführt sein. Viel mehr wird er den herkömmlichen Ventilvarianten am Markt (Dunlop/Schrader/(Auto)/franz.(Presta)) angepasst. Demnach kann dieser Bereich auch nur aus einem weichem Material oder aus einzelnen Aufnahmelippen bestehen.

Diese Ventilschaftaufnahme ist ein Universal-Adapter und anwendbar bei verschiedenen Hohlkörper. Es ist einerseits ein Bauteil der erfindungsgemäßen Ventilummantelung und andererseits als Adapter selbst Teil der vorliegenden Erfindung.

Weitere Vorteile der erfindungsgemäßen Ventilummantelung und Adapter sind:
- Die Aufnahme wird ggf. separat gefertigt und ist vorteilhafterweise aus einem Material gefertigt, welches die technischen Anforderungen optimal erfüllt.
- Auf technische Veränderungen durch Fortschritt, Entwicklung, etc. der Ventiltechnik kann schnell und gezielt reagiert werden in dem nur die Aufnahme angepasst wird.
- Ändert sich die Ventilart am Fahrrad kann idealerweise nur die Ventilschaftaufnahme getauscht werden und der vorhandene Hohlkörper bleibt bestehen.

### Bezugszeichenliste

- 1.: Hohlkörper
- 2.: Aufnahmekontur
- 3.: Ventil(schaft)aufnahme
- 4.: Weiches, biegsames Material; Gewinde
- 5.: Gewindehülse
- 6.: Felge
- 7.: Speiche
- 8.: Ventil, Ventilschaft
- 9.: Figur, Form
- 10.: Überwurfmutter
- 11.: Ventilkopf
- 12.: Befestigung

## Patentansprüche

1. Ventilschaftaufnahme für eine Ventilummantelung als Adapter zwischen Ventil und Ventilschaft und einem den Ventilschaft und Ventil umgebenden Hohlkörper **dadurch gekennzeichnet, dass** die Ventilschaftaufnahme ein Gewinde, eine Gewindehülse, einen Schienensystem und/oder weiches und/oder biegsames Material umfasst oder aus diesem besteht und damit einerseits lösbar in Eingriff zum Ventil bzw. dem Ventilschaft steht und andererseits damit den Hohlkörper lösbar befestigt.

2. Ventilschaftaufnahme nach Anspruch 1 **dadurch gekennzeichnet, dass** an der äußeren Oberfläche Haftungsmöglichkeiten, wie beispielsweise Klettverschlüsse, Klick- oder Rastmechanismen, vorgesehen sind, über die der Hohlkörper lösbar befestigt wird.

3. Ventilschaftaufnahme nach Anspruch 1 oder 2 **dadurch gekennzeichnet, dass** die Ventilschaftaufnahme als Adapter rechteckig gefertigt ist mit einer Breite von mind.14mm, eine Länge von mind.16mm und eine Tiefe von mind.15mm.

4. Ventilummantelung für Reifenventile und Ventilschaft umfassend einen Hohlkörper mit einer innenliegenden Aufnahmekontur in der eine Ventilschaftaufnahme nach einem der vorstehenden Ansprüche enthalten ist **dadurch gekennzeichnet, dass** das Ventil und der Ventilschaft von der Ummantelung vollständig umschlossen werden kann.

5. Ummantelung nach Anspruch 4 **dadurch gekennzeichnet, dass** der Hohlkörper mit Aufnahmekontur, die Ventilschaftaufnahme und/oder das in der Ventilschaftaufnahme enthaltene weiche und/oder biegsame Material aus Kunststoff, Gummi, Holz, Aluminium oder Mischungen dieser Materialien besteht.

6. Ummantelung nach einem der vorstehenden Ansprüche **dadurch gekennzeichnet, dass** die gesamte Ummantelung aus nur einem Teil besteht.

7. Ummantelung nach Anspruch 4 oder 5 **dadurch gekennzeichnet, dass** die Ummantelung aus zwei oder mehreren Teilen besteht.

8. Ummantelung nach Anspruch 7 **dadurch gekennzeichnet, dass** die jeweiligen Einzelteile separat, aus einem oder verschiedenen Materialien, hergestellt werden und abschließend zur fertigen Ummantelung zusammengefügt werden.

9. Ummantelung nach einem der vorstehenden Ansprüche **dadurch gekennzeichnet, dass** die Ummantelung sowie die jeweiligen einzelnen Bauteile ein- oder verschiedenfarbig gestaltet werden kann.

10. Ummantelung nach einem der vorstehenden Ansprüche **dadurch gekennzeichnet, dass** die Ummantelung zusätzlich als Staubschutzkappe funktioniert.

11. Ummantelung nach einem der vorstehenden Ansprüche **dadurch gekennzeichnet, dass** der Hohlkörper als beliebiges Objekt, Form oder Figur gestaltet ist.

12. Ummantelung nach einem der vorstehenden Ansprüche **dadurch gekennzeichnet, dass** auf dem Hohlkörper beliebige Objekte, Formen oder Figuren angebracht sind.

13. Verwendung einer Ventilummantelung nach einem der vorstehenden Ansprüche zur Individualisierung eines Fahrrades.
